# EUROPÄISCHE PATENTSCHRIFT

(11) **EP 1 443 087 B1**
(45) Veröffentlichungstag und Bekanntmachung des Hinweises auf die Patenterteilung: **22.02.2006**
(21) Anmeldenummer: 04000301.4
(22) Anmeldetag: 09.01.2004
(51) Int. Cl.: C09J 7/02

(54) **Selbstklebende, transparente Schutzfolie**
Self-adhesive, transparent protective sheet
Autocollante feuille protectrice transparente

(30) Priorität: 29.01.2003 DE 10303537
(43) Veröffentlichungstag der Anmeldung: 04.08.2004
(73) Patentinhaber: tesa AG, 20253 Hamburg (DE)
(72) Erfinder: Böhm, Nicolai, Dr., 20357 Hamburg (DE); Klemp, Jobst-Waldemar, 22869 Schenefeld (DE)

(56) Entgegenhaltungen:
- EP-A- 0 285 039
- US-A- 3 232 895
- US-A- 4 606 951
- US-A- 4 842 864
- US-B1- 6 492 017

## Beschreibung

Die Erfindung betrifft eine Schutzfolie, die aufgrund ihrer hohen Transparenz und Haftungssicherheit besonders für den temporären Schutz von Automobilglas, aber auch für andere empfindliche Oberflächen wie Metalle, Kunststoffe und Lacke, geeignet ist.

Bei dem langen Weg, den vor allem Exportfahrzeuge vom Herstellwerk bis zum Endverbraucher zurücklegen müssen, ist das Neufahrzeug vielfältigen schädlichen Einflüssen ausgesetzt. Nacharbeiten an Lack und Automobilscheiben, vor allem der Windschutzscheibe, sind an der Tagesordnung, da der Kunde ein einwandfreies Neufahrzeug verlangt. Dies ist ein erheblicher Kostenfaktor für die Hersteller, und es besteht ein großes Interesse an der Reduzierung dieses Aufwandes.

Während geringfügige Lackschäden in der Regel mit einer kleinen Reparaturlackierung behoben werden können, erfordert die Nachbesserung eines Kratzers in einer Automobilscheibe häufig ihren kompletten Austausch.

Besonders teuer ist der Austausch einer Windschutzscheibe. Bei einer mit einem wasserreaktiven PU-Kleber eingeklebten Scheibe, dem heute fast universell angewendeten Verfahren, wird die Scheibe mittels eines Drahtes, mit dem die Klebeschicht durchgeschnitten wird, herausgelöst. Dabei wird häufig der Lack des Scheibenrahmens verletzt, was zusätzliche Nacharbeiten erfordert. Dem Hersteller entstehen so Kosten für die Austauschscheibe, für deren Aus- und Einbau und gegebenenfalls für die Nacharbeiten der beim Austausch verursachten Lackschäden. Die Folge sind zum Teil deutlich verlängerte Lieferzeiten und unzufriedene Kunden.

Schon seit einigen Jahren werden besonders exponierte Lackflächen von Neufahrzeugen, wie insbesondere Kofferraumdeckel, Dach und Motorhaube wirkungsvoll mit Hilfe von selbstklebenden Folien abgedeckt. Sie schützen die Lacke gegen leichte Blessuren und Verschmutzungen durch Betriebsmittel wie Batteriesäure oder Kraftstoff, Flugrost und Vogelexkremente. Es handelt sich dabei in der Regel um ungereckte Polyolefinfolien aus Polyethylen, Polypropylen oder Propylenethylencopolymeren sowie Mischungen aus diesen, die zur Verbesserung der Langzeitstabilität mit TiO₂ gefüllt sind. Als Klebmasse finden häufig Polyisobutylen oder Polyethylenvinylacetat Verwendung.

Erstere werden in der EP 0 519 278 A2 offenbart, wobei die Klebmasse auf eine Folie aufgetragen ist, die ihrerseits zum Schutz von Automobilen dient. Der Haftklebstoff basiert auf Polyisobutylenkautschuk, der ein dynamisches Elastizitätsmodul von 2 x 10⁵ bis 7 x 10⁶ dyn/cm², dies entspricht in SI-Einheiten einem Wert von 2 x 10⁴ bis 70 x 10⁴ Pa, bei 60 °C aufweist. Der Kleber kann darüber hinaus mit einem Silikonöl oder einem niedermolekularen Acrylpolymerisat abgemischt sein.

In DE 196 35 704 A1 wird eine selbstklebende Oberflächenschutzfolie aus Polyolefinen mit einem Kleber aus Polyethylenvinylacetat (EVA) mit einem Vinylacetatgehalt von 40 Mol-% bis 80 Mol-%, insbesondere 70 Mol-%, und mit einem Verlustwinkel tan δ von 0,6 bis 1,0, gemessen bei einer Temperatur von 60 °C und einer Frequenz von 10⁻² Hz, und von 0,4 bis 0,7, gemessen bei einer Temperatur von 60 °C und einer Frequenz von 10 Hz beschrieben. EVA in der beanspruchten Form verfügt über eine gute Anfangshaftkraft auf Lack und eine gute Lackverträglichkeit. Die hohe Endklebkraft auf Lacken und Glasflächen ermöglicht zwar eine hohe Verklebungssicherheit, erfordert aber einen unverhältnismäßig großen Kraftaufwand beim Abziehen der Folie, was bei Personal, das täglich mit dem Demaskieren beschäftigt ist, zu gesundheitlichen Beeinträchtigungen führen kann. Es kommt bedingt durch die hohe Klebkraft überdies zu häufigem Reißen beim Demaskieren, so dass die Folie nicht in einem Stück entfernt werden kann.

Solche im Stand der Technik angegebenen undurchsichtigen, weißen Folien lassen sich allerdings nicht als Scheibenschutz verwenden, da die maskierten Fahrzeuge im Zuge ihrer Distribution mehrfach bewegt und rangiert werden müssen und eine freie Sicht durch die Scheiben unerlässlich ist.

Vielfach beschrieben sind Fensterfolien, die die Eigenschaften der beklebten Scheiben verändern, zum Beispiel durch verdunkelnde Tönung, IR-Absorption zur Wärmeisolierung oder Antireflexionsbeschichtungen.
In der US 5,925,453 A wird beispielsweise eine Fensterfolie beschrieben, die lichtreflektierend und IR-absorbierend ist und auf die Innenseite von gewölbten Autoscheiben aufgeklebt werden kann. Als mögliche Trägermaterialien, die auch mit dem IR-Absorbens mischbar sind, werden unter anderem Polyolefine wie Polyethylen und Polypropylen, Polyvinylchlorid und Polyester wie Polyethylenterephthalat und Polybutylenterephthalat bevorzugt. Als mögliche Klebmassen werden Selbstklebemassen, darunter auch synthetische Kautschuke wie Styrolbutadienkautschuk, Polyisobutylen, Styrolblockcopolymere und Polyethylenvinylacetat sowie hitze- und feuchtigkeitsaktivierbare Massen angeführt.
Die beschriebene Folie hat jedoch keine Schutzfunktion, vor allem weil sie von innen auf die konkaven Glasflächen aufgebracht wird. Solcherart Artikel sind üblicherweise für Dauerverklebungen gedacht und müssen damit andere Anforderungsschwerpunkte erfüllen.

Zum Zweck des Schutzes von vor allem Automobilscheiben und anderen empfindlichen Oberflächen ist in DE 199 54 701 A1 ein selbstklebender, hochtransparenter Schutzartikel offenbart, der einen Träger aus Polypropylen oder Polypropylencopolymer umfasst, ausgerüstet mit einer Selbstklebemasse aus Polyethylenvinylacetat mit 40 bis 80 Gewichtsprozent Vinylacetat, die abgemischt ist mit bis zu 35 Gewichtsprozent der Polyether Polypropylenglycol oder Polybutylenglycol respektive zahlreicher Endgruppenderivate von diesen.
Die Polyether sollen dabei die Rolle eines Regulators für die Klebkraft auf dem Haftgrund, speziell dem Glas spielen. Die gleiche Wirkung entfaltet sich auf der Rückseite des zur Rolle aufgewickelten Materials und ist somit abrollkraftreduzierend.
Der Nachteil dieser vorgeschlagenen Formulierungen, mit und ohne den Polyetherzusatz, ist der dramatische Klebkraftverlust speziell auf Glas unter feuchten Bedingungen wie Regen, Tau oder Nebel. Während die Folie unter trockenen Bedingungen tatsächlich sicher haftet, geht unter feuchten Bedingungen die Klebkraft so sehr zurück, dass die Gefahr von selbsttätiger Ablösung besteht, auf der Frontscheibe zusätzlich die des Abscherens durch den Scheibenwischer. Die selbsttätig gelösten Folien gefährden zum einen nachfolgenden Verkehr und büßen zum anderen ihre Schutzfunktion ein.

In der US 4,842,864 A ist die Formulierung eines Wirkstoffpflasters angegeben. Die Matrix besteht aus EVA (zu 40 bis 60 Gew.-Teilen), zu annähernd gleichem Anteil aus einem aliphatischen Monoalkohol (zu 40 bis 60 Gew.-Teilen), einem Cellulosederivat, einem mehrwertigen Alkohol (wie beispielsweise Polyethylenglycol) sowie einem transdermal verabreichbaren Wirkstoff.

Die US 3,232,895 A offenbart Klebemassen auf Basis von EVAs mit einem VA-Gehalt von 15 bis 35 Gew.-%. Des Weiteren wird der Zusatz von chlorierten Kohlenwasserstoffen und Harzen zur Klebrigmachung beschrieben. Dabei wird nicht Polyethylenglycol zugesetzt, sondern die Esterkomponente der Kolophoniumharze (Kolophonium, eine Säure, wird mit mehrwertigen Alkoholen verestert, woraus klebrigmachende Harze resultieren).

Die EP 0 285 039 A2 beschreibt eine Abdeckfolie für Fotos, also keine mit einem Kleber ausgerüstete Folie. Durch Kombination gezielt unverträglicher Polymere soll dabei eine Glanzänderung eingestellt werden. Ein mögliches Polymer für diese Folie ist EVA.

Mit der US 4,606,951 A ist ein zweischichtiges Verpackungslaminat für Lebensmittel bekannt geworden, das aus einer EVA-Folie und einem imprägnierten Papier besteht. Das EVA enthält dabei nur zu 10 bis 30 Mol-% VA.
Das Papier wird mit diversen Chemikalien imprägniert gegen das Eindringen von Öl. Um die Imprägnierung zu erleichtern, wird ein "penetrating agent" eingesetzt, das unter anderem Polyethylenglycol sein kann. Die EVA-Folie und das Polyethylenglycol kommen auf diese Art nicht in Kontakt und haben dadurch auch keine gemeinsame Wirkung.

Aufgabe der Erfindung ist es, eine Schutzfolie für Automobilglas und andere empfindliche Oberflächen zur Verfügung zu stellen, die die Nachteile des Standes der Technik nicht oder nicht in dem Maße aufweist. Insbesondere soll die Folie als Grundeigenschaft eine hohe Transparenz, sowohl klebmasse- als auch folienseitig, aufweisen und dabei eine sichere Anfangshaftung mit Feuchteresistenz und rückstandsfreier, leichter Wiederentfernbarkeit verbinden.

Gelöst wird diese Aufgabe durch eine Oberflächenschutzfolie, wie sie im Hauptanspruch niedergelegt ist. Gegenstand der Unteransprüche sind dabei vorteilhafte Weiterbildungen der Oberflächenschutzfolie sowie die Verwendung derselben.

Demgemäss betrifft die Erfindung den Aufbau einer Oberflächenschutzfolie mit einem Träger, der einen Lichtschutzstabilisator enthält, und einer Selbstklebemasse aus Polyethylenvinylacetat (EVA) mit einem Vinylacetatanteil (VA-Anteil) in der Comonomerenmischung von 40 bis 80 Gew.% und einem Schmelzindex MFI nach ISO 1133 (A/4) von 0,5 bis 25 g/10 min bei 190 °C und 2,16 kg, die mit
- 0,05 bis 35 Gew.-%: eines Polyethylenglycols, eines Polyethylenoxids der allgemeinen Formel

HO-[(CH₂)₂-O]ₘ-H (1),

eines Derivats des Polyethylenglycols mit anderen Endgruppen als der Hydroxylfunktion und/oder
eines Derivats Polyethylenoxids mit anderen Endgruppen als der Hydroxylfunktion

mit einem Molekulargewichtsmittelwert M_{w} = 200 bis 500.000 g/mol, vorzugsweise 1000 bis 40.000 g/mol abgemischt ist.

Endgruppen als Alternative zur Hydroxylfunktion sind insbesondere Alkoxyfunktionen (CₙH₂ₙ₊₁)-, zum Beispiel Methyl- oder Ethylgruppen.

In einer bevorzugten Ausführungsform besteht der Träger der Oberflächenschutzfolie aus einer ungereckten Folie von 30 bis 120 µm Dicke, vorzugsweise 35 bis 80 µm Dicke.

In einer weiteren bevorzugten Ausführungsform besteht der Träger der Oberflächenschutzfolie aus Polypropylen oder aus Propylenethylencopolymer, insbesondere aus einem random-Propylenethylencopolymer mit 2 bis 10 Gew.%, vorzugsweise 4 bis 8 Gew.% Ethylenanteil.

In einer weiteren bevorzugten Ausführungsform ist der Träger transparent.

Des weiteren ist bevorzugt, wenn der Träger der Oberflächenschutzfolie einen Lichtschutzstabilisator enthält, und zwar besonders bevorzugt mehr als 0,3 Gew.%, ganz besonders bevorzugt mehr als 0,5 Gew.%.

Besonders geeignet zur Sicherstellung einer anwendungsgerechten Langlebigkeit des Folienmaterials sind HALS-Lichtschutzmittel wie zum Beispiel Dimethylsuccinat-Polymer mit 4-Hydroxy-2,2,6,6-tetramethyl-1-piperidinethanol (CAS-Nr. 65447-77-0), Bis(2,2,6,6-tetramethyl-4-piperidinyl)sebacat (CAS-Nr. 52829-07-9) oder Poly[[6-[(1,1,3,3-tetramethyl butyl) amino]-1,3,5-triazine-2,4-diyl][[(2,2,6,6-tetramethyl-4-piperidyl) imino] hexamethylene [(2,2,6,6-tetramethyl-4-piperidyl)imino]] (CAS-Nr. 70624-18-9).

Die Verwendung der bevorzugt beanspruchten Propylenethylencopolymere vereinigt eine für diesen Anwendungszweck hervorragend geeignete Transparenz und Oberflächenglätte mit großer Flexibilität, so dass auch gewölbte Oberflächen wie Windschutzscheiben, optische Linsen oder Handydisplays faltenfrei zu bekleben sind. Für die mechanischen und optischen Eigenschaften der Folie sind neben der Rohstoffauswahl auch die Herstellbedingungen von Bedeutung. Vorteilhaft für die gewünschten Eigenschaften ist das Gießverfahren, wobei die Kühlwalzentemperatur zwischen 5 °C und 45 °C, vorzugsweise zwischen 10 °C und 25 °C betragen sollte, um möglichst hohe Transparenz und hohen Oberflächenglanz zu erzeugen.

Zwischen Klebmasse und Folie kann sich ein Primer aus EVA mit einem VA-Anteil von 10 bis 50 Gew.-%, vorzugsweise von 25 bis 40 Gew.-%, befinden. Dieser kann in einer Dicke von 1 bis 20 µm, vorzugsweise in 5 bis 15 µm aufgetragen oder mit der Trägerschicht coextrudiert sein.
Auch eine physikalische Vorbehandlung wie Corona oder Beflammung ist geeignet.

Die Klebmasse besteht aus Polyethylenvinylacetat (EVA) mit einem VA-Anteil in der Comonomerenmischung von 40 bis 80 Gew.-%, vorzugsweise 45 bis 70 Gew.-%, und einem Zusatz eines Polyethylenglycols gemäß der Formel (1) von 0,05 bis 35 Gew.-%, vorzugsweise von 1 bis 20 Gew.-%. Der Kleber ist bevorzugt in einer Stärke von 3 bis 50 g/m², besonders bevorzugt 10 bis 30 g/m² aufgetragen.

Polyethylenglycole und Polyethylenoxide sind Polyether aus der Gruppe der Polyalkylenglycole. Polyethylenoxide beziehungsweise Polyethylenglycole werden technisch hergestellt durch anionische Ringöffnungspolymerisation von Ethylenoxid meist in Gegenwart geringer Mengen Wasser. Sie sind in weiten Molmassenbereichen polymerisierbar. Sie haben je nach Reaktionsführung Molmassen im Bereich von ca. 200 bis 5.000.000 g/mol, entsprechend Polymerisationsgraden Pₙ von ca. 5 bis über 100.000. Flüssige Produkte mit Molmassen kleiner als ca. 25.000 g/mol werden als Polyethylenglycole (PEG), die höhermolekularen festen (Schmelzpunkt um 65 °C) als Polyethylenoxide (PEOX) bezeichnet.

Der Zusatz der beschriebenen Polyethylenglycole beziehungsweise Polyethylenoxide zur Klebmassebasis Polyethylenvinylacetat bewirkt unerwartet und für den Fachmann unvorhersehbar vorrangig eine Unempfindlichkeit der Verklebungsfestigkeit unter feuchten Bedingungen wie Regen, Tau oder Nebel besonders auf Glas. Trotz dieser Eigenschaft bleiben die erforderliche Anfassklebrigkeit, die Alterungsstabilität, die Transparenz, die gesundheitliche und umweltmäßige Unbedenklichkeit sowie die Belagsfreiheit der beklebten Oberflächen, insbesondere Glas, nach dem Demaskieren in vollem Umfang erhalten.
Eine Klebkraftreduzierung auf trockenen Haftgründen tritt wie bei den höheren Homologen der Polyethylenglycole, also den Polypropylen- und Polybutylenglycolen, ebenfalls auf, spielt aber im Sinne der Erfindung eine untergeordnete Rolle.

Die beanspruchte Klebmasse auf Basis EVA ist für Glasoberflächen und andere glatte Oberflächen sehr geeignet, denn sie besitzt die Eigenschaft, bündig darauf aufzufließen und eine nahezu unsichtbare Phasengrenze zwischen Haftgrund und Klebmasse zu erzeugen. Das EVA in der beschriebenen Form bildet dabei das Polymergrundgerüst der Klebmasse, in welches das Polyethylenglycol eigenschaftsmodifizierend im erfindungsgemäßen Sinne eingebettet ist. Beide Komponenten sind gleichermaßen bewitterungsstabil und daher besonders für eine Außenanwendung geeignet. Sie bestehen problemlos ein halbes Jahr unter Floridabedingungen. Sofern die Trägerfolie wie oben beschrieben mit Lichtschutzmitteln abgemischt ist, ist die gesamte Schutzfolie mindestens ein halbes Jahr unter Floridabedingungen beständig.

Da es sich um ein chemisch unvemetztes Polymergerüst handelt, das aufgrund seines Monomerverhältnisses nur schwach bis gar nicht kristallin ist, nimmt das Molekulargewicht, das direkt mit dem MFI korreliert, eine entscheidende Stellung in bezug auf die Kohäsivität der Klebmasse ein. Ein MFI von 1 bis 5 hat sich dabei als günstiger Wert erwiesen. Die Zumischung eines Teils des EVA mit einem MFI von bis zu 25 kann aber zur Fließeigenschaftsverbesserung beitragen, wenn die Klebmasse aus der Schmelze aufgebracht oder zusammen mit einem Träger coextrudiert werden soll.

Die Klebmasse lässt sich sowohl aus Lösung als auch aus der Schmelze auf den Träger auftragen. Die bevorzugte Auftragsstärke von 10 bis 30 g/m² gewährleistet ein ausreichendes Massepolster, um bündig aufzufließen, ohne dass es zu nennenswerten Masserückständen kommt. In Einzelfällen kann ein Auftragsgewicht von bis zu 50 g/m² vorteilhaft sein.
Das ganze Produkt lässt sich auch in einem einzigen Arbeitsgang durch Mehrlagencoextrusion herstellen.
Die Folie kann direkt nach dem Beschichten beziehungsweise Extrudieren in endgültiger Form aufgewickelt, aber auch in einem nachgeschalteten Schritt von einem großen Ballen als Zwischenprodukt in die gewünschten Abmessungen aufgerollt werden.
Anstatt zu Rollen auf sich selbst zu wickeln, kann das Produkt auch mit einer Hilfseindeckung mit dehäsiven Eigenschaften versehen werden und so als Blatt- oder Rollenware dargereicht werden.
Die Eindeckung mit einem dehäsiven bahnförmigen Material ermöglicht auch die Konfektionierung der Schutzfolie zu gestanzten Formkörpern beliebiger Gestalt.

Die Aufbringung der Folie auf die Haftgründe kann trocken oder mit Hilfe von entspanntem Wasser erfolgen, das sowohl auf den Haftgrund als auch auf die Schutzfolienrückseite gesprüht wird und zusammen mit den eingeschlossenen Luftblasen durch Streichen mit einer Gummilippe entfernt wird.

Eine wie oben beschrieben ausgeführte und aufgebrachte Schutzfolie vereinigt eine hohe Transparenz, eine gute Flexibilität, eine gute Anfangshaftung bei gleichzeitig einwandfreier Entfernbarkeit vom Haftgrund auch nach längerer Verklebungszeit. Hervorzuhebenderweise behält die Folie ihre gute Haftkraft auch unter feuchten Bedingungen bei, besonders gut auf Glasoberflächen. Unter Anwendungsbedingungen bleibt die Transparenz auch nach Einsatz der Scheibenwischer und einem halben Jahr Florida-Klima in solchem Maße erhalten, dass ein Fahrzeug mit einer durch eine erfindungsgemäß ausgeführte Folie geschützten Windschutzscheibe gefahrlos bewegt werden kann.

Die erfindungsgemäße Oberflächenschutzfolie für insbesondere Automobilglasscheiben wird nachfolgend in bevorzugter Ausführung anhand mehrerer Beispiele von Oberflächenschutzfolien beschrieben, ohne damit die Erfindung in irgendeiner Weise beschränken zu wollen. Des weiteren sind zwei Vergleichsbeispiele aufgeführt, in denen ungeeignete Oberflächenschutzfolien dargestellt sind.

### Beispiele

Alle Beispielschutzfolien wurden durch Beschichtung der Klebmassen aus einer Lösung in Toluol/Isopropanol (3:1) auf eine 60 µm dicke Castfolie aus einem random-Copolymer aus Propylen und 6 Gewichtsprozent Ethylen hergestellt, deren zu beschichtende Seite mit einer Coronaentladung zum Zwecke der verbesserten Verankerung der Klebmasse vorbehandelt worden war. Alle Muster wurden so beschichtet, dass ein Klebmasseflächengewicht von 18 g/m² ± 2 g/m² erzielt wurde.

Die Rezepturen der Klebmassen der einzelnen Beispielmuster sind untenstehender Tabelle zu entnehmen. Die Zahlen geben dabei die Gewichtsverhältnisse der Komponenten zueinander an.

| | Beispiele | | | Gegenbeispiele | | |
|---|---|---|---|---|---|---|
| | 1 | 2 | 3 | 4 | 5 | 6 |
| EVA mit 50 % VA-Anteil | 90 | | | | | 90 |
| EVA mit 60 % VA-Anteil | | 95 | 85 | 100 | 95 | |
| Polyethylenglycol 10.000 g/mol | 10 | | | | | |
| Polyethylenglycol 6.000 g/mol | | 5 | | | | |
| Polyethylenglycol 20.000 g/mol | | | 15 | | | |
| Polypropylenglycol 4.800 g/mol | | | | | 5 | |
| Polybutylenglycol 2.900 g/mol | | | | | | 10 |

### Prüfkriterien

Das entscheidende Prüfkriterium ist die Resistenz der Verklebungsstärke unter Feuchtigkeitseinfluss, insbesondere die Differenz zwischen der Schälkraft von Glas von Mustern mit und ohne Feuchtigkeitseinfluss. Weiterhin wichtig für ein funktionierendes Klebeband ist die Rückstandsfreiheit des Haftgrundes nach dem Abziehen und die einwandfreie Transparenz.

### Durchführung der Tests

### Schälkraft

Dazu wurde die Schälkraft von Glas analog AFERA Test Methode 4001 gemessen, wobei in Abweichung dazu Standardfensterglas als Haftgrund gewählt wurde und zwischen Aufbringung und Entfernen eine Periode von 24 h lag. Während dieser 24 h wurde jeweils ein Muster bei Normbedingungen gelagert (23 °C ± 1 °C und 50 % ± 5 % relative Luftfeuchte) und ein identisches in einem Wasserbad mit einer Temperatur von 23 °C ± 1 °C. Das Messergebnis "Schälkrafterhalt" ist der Quotient aus Schälkraft des im Wasser und des im Trockenen gelagerten Musters, ausgedrückt in %. Je näher der Schälkrafterhalt an 100 % ist, desto besser ist das Ergebnis.

### Prüfung auf Klebmasserückstände

Nach erfolgter Schälkraftprüfung wurde die Glasplatte an der Stelle, wo der Klebesteifen platziert gewesen war, visuell auf sichtbare Rückstände oder Schatten beurteilt.

Folgendes Punkteschema beschreibt den Grad der Rückstandsausprägung:
0 = nicht sichtbar
1 = schwach sichtbar
2 = deutlich sichtbar

### Beurteilung der Transparenz

Die blasenfrei verklebten Schutzfolien wurden nach 24 Lagerung unter Normklimabedingungen visuell auf Transparenz geprüft, wobei folgende Wertung erfolgte:
0 = hohe Transparenz
1 = schwach beeinträchtigte Transparenz
2 = deutlich beeinträchtigte Transparenz

### Ergebnisse

| | Beispiele | | | Gegenbeispiele | | |
|---|---|---|---|---|---|---|
| | 1 | 2 | 3 | 4 | 5 | 6 |
| Schälkraft von Glas nach 24 h trocken (N/cm) | 1,1 | 1,6 | 1,5 | 2,1 | 1,8 | 1,3 |
| Schälkraft von Glas nach 24 h feucht (N/cm) | 0,9 | 1,4 | 1,2 | 0,1 | 0,2 | 0,1 |
| Schälkrafterhalt nach 24 h Feuchte (%) | 82 | 88 | 80 | 5 | 11 | 8 |
| Rückstände auf Glas nach 24 h trocken | 0 | 0 | 0 | 0 | 0 | 0 |
| Rückstände auf Glas nach 24 h feucht | 0 | 0 | 0 | 0 | 0 | 0 |
| Transparenz auf Glas nach 24 h trocken | 0 | 0 | 0 | 0 | 0 | 0 |

Die Ergebnisse zeigen deutlich, dass Zusätze von Polyethylenglycol zu EVA-Haftklebemassen die Haftkraft auf Glas unter feuchten Bedingungen verglichen mit reinen EVA-Massen oder mit höheren Homologen des Polyethylenglycol (Polypropylenglycol, Polybutylenglyol) abgemischten Massen in hohem Maße zu erhalten vermag. Bei allen Beispielen, auch den Vergleichsbeispielen, sind Rückstände auf dem Glas sowohl unter trockenen als auch feuchten Bedingungen nicht sichtbar. Die Transparenz der Klebmasse wird durch den Polyethylenglycol Zusatz nicht beeinträchtigt.
Es: ist also möglich, durch den Zusatz von Polyethylenglycol zu EVA Haftklebemassen deren Haftfestigkeit auf Glas unter feuchten Bedingungen zu verbessern und dabei gleichzeitig die Forderung nach Rückstandsfreiheit sowohl unter trockenen als auch feuchten Bedingungen bei einer gleichzeitig hohen Transparenz zu erfüllen.

## Patentansprüche

1. Oberflächenschutzfolie mit einem Träger und einer Selbstklebemasse aus Polyethylenvinylacetat (EVA) mit einem Vinylacetatanteil (VA-Anteil) in der Comonomerenmischung von 40 bis 80 Gew.% und einem Schmelzindex MFI nach ISO 1133 (A/4) von 0,5 bis 25 g/10 min bei 190 °C und 2,16 kg, die mit
0,05 bis 35 Gew.-% eines Polyethylenglycols,
eines Polyethylenoxids der allgemeinen Formel
HO-[(CH₂)₂-O]ₘ-H.
eines Derivats des Polyethylenglycols mit anderen Endgruppen als der Hydroxylfunktion und/oder
eines Derivats Polyethylenoxids mit anderen Endgruppen als der Hydroxylfunktion
mit einem Molekulargewichtsmittelwert M_{w} = 200 bis 500.000 g/mol, vorzugsweise 1000 bis 40.000 g/mol abgemischt ist.

2. Oberflächenschutzfolie nach Anspruch 1, **dadurch gekennzeichnet, dass** die Endgruppen des Polyethylenglycols beziehungsweise Polyethylenoxids Alkoxyfunktionen (CₙH₂ₙ₊₁)- aufweisen.

3. Oberflächenschutzfolie nach Anspruch 1 oder 2, **dadurch gekennzeichnet, dass** der Träger aus einer ungereckten Folie von 30 bis 120 µm Dicke, vorzugsweise 35 bis 80 µm Dicke besteht.

4. Oberflächenschutzfolie nach zumindest einem der Ansprüche 1 bis 3, **dadurch gekennzeichnet, dass**
der Träger aus Polypropylen oder aus einem Propylenethylencopolymer besteht, insbesondere aus einem random-Propylenethylencopolymer mit 2 bis 10 Gew.-%, vorzugsweise 4 bis 8 Gew.-% Ethylenanteil.

5. Oberflächenschutzfolie nach zumindest einem der vorherigen Ansprüche, **dadurch gekennzeichnet, dass**
der Träger einen Lichtschutzstabilisator enthält, bevorzugt zu mehr als 0,3 Gew.-%, besonders bevorzugt mehr als 0,5 Gew.-%.

6. Oberflächenschutzfolie nach zumindest einem der vorherigen Ansprüche, **dadurch gekennzeichnet, dass**
der Träger transparent ist.

7. Oberflächenschutzfolie nach zumindest einem der vorherigen Ansprüche, **dadurch gekennzeichnet, dass**
der VA-Anteil in der Comonomerenmischung des Polyethylenvinylacetats 45 bis 70 Gew.-% beträgt.

8. Oberflächenschutzfolie nach zumindest einem der vorherigen Ansprüche, **dadurch gekennzeichnet, dass**
der Selbstklebemasse aus Polyethylenvinylacetat (EVA)
1 bis 20 Gew.-% eines Polyethylenglycols,
eines Polyethylenoxids der allgemeinen Formel
HO-[(CH₂)₂-O]ₘ-H,
eines Derivats des Polyethylenglycols mit anderen Endgruppen als der Hydroxylfunktion und/oder
eines Derivats Polyethylenoxids mit anderen Endgruppen als der Hydroxylfunktion
zugesetzt werden.

9. Oberflächenschutzfolie nach zumindest einem der vorherigen Ansprüche, **dadurch gekennzeichnet, dass**
zwischen Klebmasse und Folie ein Primer vorhanden ist, bevorzugt aus EVA mit einem VA-Anteil von 10 bis 50 Gew.-%, weiter vorzugsweise von 25 bis 40 Gew.-%.

10. Verwendung einer Oberflächenschutzfolie nach zumindest einem der vorherigen Ansprüche auf gewölbten Oberflächen wie optische Linsen oder Handydisplays, insbesondere Windschutzscheiben.

## Claims

1. Surface protection sheet comprising a backing and a self-adhesive composition comprising polyethylene-vinyl acetate (EVA) with a vinyl acetate fraction (VA fraction) in the comonomer mixture of 40% to 80% by weight and with a melt index MFI to ISO 1133 (A/4) of 0.5 to 25 g/10 min at 190°C and 2.16 kg, blended with
0.05% to 35% by weight of a polyethylene glycol,
of a polyethylene oxide of the general formula
HO-[(CH₂)₂-O]ₘ-H,
of a derivative of polyethylene glycol with end groups other than the hydroxyl function and/or
of a derivative of polyethylene oxide with end groups other than the hydroxyl function,
having a molecular weight average M_{w} = 200 to 500 000 g/mol, preferably 1000 to 40 000 g/mol.

2. Surface protection sheet according to Claim 1, **characterized in that** the end groups of the polyethylene glycol and/or polyethylene oxide have alkoxy functions (CₙH₂ₙ₊₁)-.

3. Surface protection sheet according to Claim 1 or 2, **characterized in that** the backing is composed of an unoriented film of 30 to 120 µm thickness, preferably 35 to 80 µm thickness.

4. Surface protection sheet according to at least one of Claims 1 to 3, **characterized in that** the backing is composed of polypropylene or of a propylene-ethylene copolymer, in particular of a random propylene-ethylene copolymer having a 2% to 10% by weight, preferably 4% to 8% by weight, ethylene fraction.

5. Surface protection sheet according to at least one of the preceding claims, **characterized in that** the backing contains a light stabilizer, preferably at more than 0.3% by weight, more preferably more than 0.5% by weight.

6. Surface protection sheet according to at least one of the preceding claims, **characterized in that** the backing is transparent.

7. Surface protection sheet according to at least one of the preceding claims, **characterized in that** the VA fraction in the comonomer mixture of the polyethylene-vinyl acetate is 45% to 70% by weight.

8. Surface protection sheet according to at least one of the preceding claims, **characterized in that** the polyethylene-vinyl acetate (EVA) self-adhesive composition is admixed with
1% to 20% by weight of a polyethylene glycol,
of a polyethylene oxide of the general formula
HO-[(CH₂)₂-O]ₘ-H,
of a derivative of polyethylene glycol having end groups other than the hydroxyl function and/or
of a derivative of polyethylene oxide having end groups other than the hydroxyl function.

9. Surface protection sheet according to at least one of the preceding claims, **characterized in that** between adhesive and film there is a primer, preferably of EVA with a VA fraction of 10% to 50% by weight, more preferably of 25% to 40% by weight.

10. Use of a surface protection sheet according to at least one of the preceding claims on curved surfaces such as optical lenses or mobile-phone displays, especially windscreens.

## Revendications

1. Feuille de protection de surface présentant un support et une masse auto-adhésive en poly(éthylène-acétate de vinyle) (EVA) présentant une proportion d'acétate de vinyle (proportion de VA) dans le mélange de comonomères de 40 à 80% en poids et un indice de fusion MFI selon la norme ISO 1133 (A/4) de 0,5 à 25 g/10 min à 190°C et 2,16 kg, qui est mélangé avec
0,05 à 35% en poids d'un polyéthylèneglycol
d'un poly(oxyde d'éthylène) de formule générale
HO-[(CH₂)₂-O]ₘ-H,
d'un dérivé du polyéthylèneglycol présentant d'autres groupements terminaux que la fonction hydroxyle et/ou
d'un dérivé du poly(oxyde d'éthylène) avec d'autres groupements terminaux que la fonction hydroxyle,
présentant un poids moléculaire moyen M_{w} = 200 à 500 000 g/mole, de préférence de 1000 à 40 000 g/mole.

2. Feuille de protection de surface selon la revendication 1, **caractérisée en ce que** les groupements terminaux du polyéthylèneglycol ou du poly(oxyde d'éthylène) présentent des fonctions alcoxy (CₙH₂ₙ₊₁)-.

3. Feuille de protection de surface selon la revendication 1 ou 2, **caractérisée en ce que** le support est constitué d'une feuille non étirée d'une épaisseur de 30 à 120 µm, de préférence de 35 à 80 µm.

4. Feuille de protection de surface selon au moins l'une quelconque des revendications 1 à 3, **caractérisée en ce que** le support est constitué de polypropylène ou d'un copolymère de propylène-éthylène, en particulier d'un copolymère aléatoire de propylène-éthylène présentant une proportion d'éthylène de 2 à 10% en poids, de préférence de 4 à 8% en poids.

5. Feuille de protection de surface selon au moins l'une quelconque des revendications précédentes, **caractérisée en ce que** le support contient un stabilisateur de protection contre la lumière, de préférence à raison de plus de 0,3% en poids, de préférence plus de 0,5% en poids.

6. Feuille de protection de surface selon au moins l'une quelconque des revendications précédentes, **caractérisée en ce que** le support est transparent.

7. Feuille de protection de surface selon au moins l'une quelconque des revendications précédentes, **caractérisée en ce que** la proportion de VA dans le mélange de comonomères du poly(éthylène-acétate de vinyle) est de 45 à 70% en poids.

8. Feuille de protection de surface selon au moins l'une quelconque des revendications précédentes, **caractérisée en ce que** la masse auto-adhésive en poly(éthylène-acétate de vinyle) (EVA) est mélangée avec
1 à 20% en poids d'un polyéthylèneglycol,
d'un poly(oxyde d'éthylène) de formule générale
HO-[(CH₂)₂-O]ₘ-H
d'un dérivé du polyéthylèneglycol avec d'autres groupements terminaux que la fonction hydroxyle
et/ou d'un dérivé de poly(oxyde d'éthylène) présentant d'autres groupements terminaux que la fonction hydroxyle.

9. Feuille de protection de surface selon au moins l'une quelconque des revendications précédentes, **caractérisée en ce qu'**un apprêt, de préférence en EVA présentant une proportion de VA de 10 à 50% en poids, de préférence de 25 à 40% en poids, est présent entre la masse adhésive et la feuille.

10. Utilisation d'une feuille de protection de surface selon au moins l'une quelconque des revendications précédentes sur des surfaces bombées, telles que des lentilles optiques ou des affichages de portables, en particulier des pare-brise.
